# EUROPÄISCHE PATENTSCHRIFT

(11) **EP 2 736 789 B1**
(45) Veröffentlichungstag und Bekanntmachung des Hinweises auf die Patenterteilung: **15.03.2017**
(21) Anmeldenummer: 12740152.9
(22) Anmeldetag: 26.07.2012
(51) Int. Cl.: B61H 7/08, B60L 7/00, B60L 11/00, B60L 7/28

(54) **VORRICHTUNG ZUR BEAUFSCHLAGUNG WENIGSTENS EINER ELEKTRISCHEN SPULE EINER SCHIENENBREMSE EINES SCHIENENFAHRZEUGS MIT WENIGSTENS EINEM ELEKTRISCHEN IMPULS**
DEVICE FOR APPLYING AT LEAST ONE ELECTRICAL PULSE TO AT LEAST ONE ELECTRICAL COIL OF A TRACK BRAKE OF A RAIL VEHICLE
DISPOSITIF DESTINÉ À SOUMETTRE AU MOINS UNE BOBINE ÉLECTRIQUE D'UN FREIN SUR RAIL D'UN VÉHICULE FERROVIAIRE À L'EFFET D'AU MOINS UNE IMPULSION ÉLECTRIQUE

(30) Priorität: 28.07.2011 DE 102011108718
(43) Veröffentlichungstag der Anmeldung: 04.06.2014
(73) Patentinhaber: Knorr-Bremse Gesellschaft mit beschränkter Haftung, 2340 Mödling (AT)
(72) Erfinder: WIDL, Wolfgang, A-2352 Gumpoldskirchen (AT); SCHLAGER, Peter, A-3204 Kirchberg (AT); LEHMANN, Henry, A-2371 Hinterbrühl (AT); MOZDZEN, Janusz, A-2483 Ebreichsdorf (AT)
(74) Vertreter: Wiedemann, Markus
(86) Internationale Anmeldenummer: PCT/EP2012/064699
(87) Internationale Veröffentlichungsnummer: WO 2013/014237

(56) Entgegenhaltungen:
- EP-A1- 0 087 027
- EP-A2- 1 477 382
- GB-A- 903 477

## Beschreibung

### Stand der Technik

Die Erfindung betrifft eine Vorrichtung zur Versorgung wenigstens einer elektrischen Erregerspule mit wenigstens einem elektrischen Stromimpuls zum hinsichtlich der magnetischen Polung wahlweisen Permanentmagnetisieren oder Entmagnetisieren wenigstens eines hartmagnetisches Material beinhaltenden Magnetsegments eines Bremsmagneten eines Schienenfahrzeugs, gemäß dem Oberbegriff von Patentanspruch 1. Eine solche Vorrichtung wird im Folgenden kurz als "Vorrichtung" bezeichnet und ist in EP 1 477 382 A2 offenbart

Die EP 1 477 382 A2 beschreibt elektrisch betätigte Magnetschienenbremsen mit einem in einem Bremsmagneten angeordneten Magnetkern, welcher aus einem hartmagnetischen Material besteht und mittels impulsartiger Bestromung einer Erregerspule permanentmagnetisierbar bzw. mittels impulsartiger entgegen gerichteter Bestromung der Erregerspule entmagnetisierbar oder hinsichtlich der magnetischen Polung gegenläufig permanentmagnetisierbar ist. Abhängig von der Magnetisierung durch die Erregerspule wird dann von dem aus dem hartmagnetischen Material bestehenden Kern eine Schiene durchflutendes Magnetfeld erzeugt oder nicht.

Der solchermaßen permanent magnetisierte Magnetkern erzeugt einen magnetischen Fluss, der sich über den Schienenkopf kurzschließt, sobald der Bremsmagnet mit seinen Polschuhen auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremse über Mitnehmer entlang der Schiene gezogen. Hierbei entsteht durch die Gleitreibung zwischen Bremsmagnet und Schiene in Verbindung mit der magnetischen Anziehungskraft eine Bremskraft. Wegen des dadurch auftretenden Verschleißes werden reibungsbasierte Magnetschienenbremsen bevorzugt für Schnellbremsungen oder als Notbremse eingesetzt.

Andererseits werden in der EP 1 477 382 A2 auch Schienenbremsen in der Ausführung als lineare Wirbelstrombremsen beschrieben, bei der auf die oben beschriebene Weise permanent magnetisierte Magnetkerne als Folge von Wirbelströmen und deren Magnetfeldern Bremskräfte erzeugen. Eine solche lineare Wirbelstrombremse wird im Einsatz in einen Abstand von nur wenigen Millimetern zum Schienenkopf abgesenkt, so dass ein geringer Luftspalt bestehen bleibt, wodurch eine solche Wirbelstrombremse praktisch verschleißfrei arbeitet. Deshalb wird sie bevorzugt als Betriebsbremse eingesetzt.

Betreffend der Ausführungsformen von Magnetschienenbremsen wird weiterhin auf die Veröffentlichung "Grundlagen der Bremstechnik", Seiten 92 bis 101 der Knorr-Bremse AG, München, 2002" verwiesen.

Bei den genannten Bremssystemen wird eine Erregerspule eines solchen aus hartmagnetischem Material bestehenden Magnetelements mit einer im Vergleich zu Elektromagnetschienenbremsen oder elektrischen Wirbelstrombremse höheren (z.B. 10 kW) elektrischen Leistung beaufschlagt, wobei je Drehgestell eines Schienenfahrzeugs eine oder mehrere solcher Erregerspulen bzw. Magnetelemente notwendig sind, um eine geforderte Bremsleistung zu erbringen. Dabei ist zum einen klar, dass von der Vorrichtung eine hohe elektrische Leistung zur Verfügung gestellt werden muss. Zum andern reicht es zum Umpolen bzw. Entmagnetisieren der Magnetelemente aus, diese hohe elektrische Leistung sehr kurzfristig zu erzeugen, z.B. 500 ms lang.

Zur Sicherstellung einer zuverlässigen Magnetschienenbremse, vor allem als Schnell- oder Notbremse sollte eine weitgehende Unabhängigkeit einer gattungsbildenden Vorrichtung vom Betriebszustand des Schienenfahrzeugs und insbesondere vom Betriebszustand der elektrischen Ausrüstung des Schienenfahrzeugs vorliegen.

### Aufgabe der Erfindung

Die Aufgabe der Erfindung besteht daher darin, eine Vorrichtung der eingangs erwähnten Art zu schaffen, durch welche eine möglichst hohe Verfügbarkeit der durch sie mit elektrischen Impulsen versorgten Schienenbremse erzielt wird. Gleichzeitig soll die Vorrichtung auf möglichst einfache Weise ein sehr kurzzeitiges Schalten von hoher elektrischer Leistung auf die Erregerspule des Magnetelements ermöglichen.

### Offenbarung der Erfindung

Die erfindungsgemäße Vorrichtung ist gekennzeichnet durch
- wenigstens einen von einem mindestens zeitweise unter Bordnetz-Spannung stehenden Bordnetz-Stromkreis des Schienenfahrzeugs mit elektrischer Energie versorgbaren Langzeit-Energiespeicher,
- wenigstens einen Magnetisierungs-Stromkreis, mit einem Spannungswandler zur Wandelung der vom Langzeit-Energiespeicher gelieferten Bordnetz-Spannung auf eine vorgegebene Magnetisierungs-Spannung und zum Aufladen wenigstens eines Hochstrom-Energiespeichers mit elektrischer Energie unter Magnetisierungs-Spannung sowie mit einer einerseits mit dem Hochstrom-Energiespeicher und andererseits mit der Erregerspule in elektrisch leitender Verbindung stehenden elektrischen Schalteinrichtung, durch welche abhängig von den von einer Steuereinrichtung ausgesteuerten Steuersignalen auf der im Hochstrom-Energiespeicher gespeicherten elektrischen Energie basierende und hinsichtlich der Stromfließrichtung wahlweise variierbare Stromimpulse auf die Erregerspule schaltbar sind.

Die Vorrichtung beinhaltet daher einen Langzeit- und einen Hochstrom-Energiespeicher, einen Spannungswandler und eine Schalteinrichtung, z.B. ein Wendepolschalter. Dabei ist der Langzeit-Energiespeicher wie z.B. ein Akkumulator mit dem Bordnetz-Stromkreis verbunden, so dass dessen Ladung über das Bordnetz erfolgt, eine Entladung in den Bordnetz-Stromkreis aber nicht möglich ist. Aus dem Langzeit-Energiespeicher wird über den Spannungswandler der Hochstrom-Energiespeicher wie beispielsweise ein Kondensator in einen definierten Ladezustand bzw. unter eine vorgegebene Magnetisierungs-Spannung gesetzt bzw. in einem solchen Zustand gehalten.

Die Schalteinrichtung oder Stromflussrichtungs-Änderungseinrichtung, insbesondere ein Wendepolschalter dient zur Erzeugung der für den Wirkzustand (magnetisch eingeschaltet, ausgeschaltet bzw. im Hinblick auf die magnetische Polarität umgeschaltet) des wenigstens einen Magnetelements notwendigen Schaltung der Stromflussrichtung der elektrischen Schaltimpulse für die Erregerspule.

Durch die genannten Maßnahmen ist die Verfügbarkeit einer von der Vorrichtung angesteuerten Schienenbremse unabhängig vom elektrischen Betriebszustand des Schienenfahrzeugs, weil durch die Aufteilung der Energiespeicherung in Langzeit- und Hochstrom-Energiespeicher eine Entkoppelung des Magnetisierungs-Stromkreises vom Bordnetz-Stromkreis erfolgt. Eine Störung des Bordnetz-Stromkreises kann sich bedingt durch den Langzeit-Energiespeicher daher nicht auf den Magnetisierungs-Stromkreis auswirken.

Weiterhin können bedingt durch die Aufteilung auf zwei unabhängige Energiespeicher die Eigenschaften der beiden Energiespeicher in Bezug zu Faktoren wie Energiedichte, Baugröße und Gewicht jeweils unabhängig voneinander optimal angepasst werden.

Unter einem "Langzeit-Energiespeicher" soll daher im Folgenden ein Energiespeicher wie etwa ein Akkumulator verstanden werden, welcher eine Eignung zur längerfristigen Speicherung von elektrischer Energie aufweist. Hingegen ist im Sinne der Erfindung unter einem "Hochstrom-Energiespeicher" ein Energiespeicher zu verstehen, welcher zur kurzzeitigeren Speicherung von elektrischer Energie und unter schneller Entladung zur Erzeugung von Impulsen hoher Ströme geeignet ist.

Durch die in den Unteransprüchen aufgeführten Maßnahmen sind vorteilhafte Weiterbildungen und Verbesserungen der im Anspruch 1 angegebenen Erfindung möglich.

Gemäß einer Ausführungsform ist der Langzeit-Energiespeicher ein dem Schienenfahrzeug zugeordneter Energiespeicher, welcher elektrische Energie außer zur Erzeugung des wenigstens einen elektrischen Impulses auch für wenigstens eine weitere Funktion zur Verfügung stellt, beispielsweise für Zusatzaggregate wie eine Klimaanlage.

Alternativ kann der Langzeit-Energiespeicher ein separater, ausschließlich zur Versorgung der Vorrichtung mit elektrischer Energie vorgesehener Energiespeicher sein, d.h. dieser Energiespeicher dient einzig dem Zweck der Versorgung der Vorrichtung mit elektrischer Energie, worunter neben dem Magnetisierungs-Stromkreis mit dem Spannungswandler, dem Hochstrom-Energiespeicher und die Schalteinrichtung auch beispielsweise die elektronische Steuereinrichtung der Vorrichtung fällt.

Besonders bevorzugt steht der Langzeit-Energiespeicher mittels einer Schutzdiode mit dem Bordnetz-Stromkreis in Verbindung. Dadurch wird eine Entladung des Langzeit-Energiespeichers über den Bordnetz-Stromkreis verhindert.

Gemäß einer Weiterbildung kann vorgesehen sein, dass die Schalteinrichtung wenigstens einen von der Steuereinrichtung elektrisch oder durch Druckmittel wie Druckluft steuerbaren Wendepolschalter beinhaltet. Ein solcher Wendepolschalter ist beispielsweise zur Drehrichtungsumkehr von elektrischen Maschinen hinreichend bekannt und stellt ein kostengünstiges standardisiertes Bauteil dar.

Insbesondere kann der Wendepolschalter als 2-Stellungschalter mit einer Stromrichtungsstellung und einer weiteren, demgegenüber gegenläufigen Stromrichtungsstellung, als 3-Stellungschalter mit einer Stromrichtungsstellung, einer weiteren, demgegenüber gegenläufigen Stromrichtungsstellung sowie mit Neutralstellung oder als 4-Quadrantensteller ausgebildet ist. Unter "Stromrichtungsstellung" ist dabei eine Schaltstellung des Wendepolschalters zu verstehen, welche eine bestimmte Flussrichtung des den Wendepolschalter durchfließenden Stromes bewirkt.

Bevorzugt beinhaltet der Hochstrom-Energiespeicher wenigstens einen Kondensator oder einen Doppelschichtkondensator. Kondensatoren eignen sich bekanntlich für eine schnelle Entladung wie sie zur Erzeugung der die Erregerspule beaufschlagenden Stromimpulse vorteilhaft ist. Doppelschichtkondensatoren (supercaps®) verfügen über eine sehr hohe Energiedichte. Ihre hohe Kapazität basiert auf der Dissoziation von Ionen in einem flüssigen Elektrolyt, die ein Dielektrikum von wenigen Atomlagen und einer großen Elektrodenoberfläche bilden.

Der Schalteinrichtung und dem Hochstrom-Energiespeicher ist bevorzugt wenigstens ein elektronischer Leistungsschalter zwischengeschaltet ist, welcher von der Steuereinrichtung steuerbar ist.

Die Steuereinrichtung zur Steuerung der Schalteinrichtung bzw. des elektronischen Leistungsschalters wird bevorzugt durch ein elektronisches Steuergerät gebildet.

Die Steuereinrichtung ist bevorzugt derart ausgebildet, dass die Schalteinrichtung nur für eine Zeitdauer in einen Stromdurchgangszustand gesteuert wird, in dem wenigstens ein Stromimpuls auf die Erregerspule geschaltet ist, welche notwendig ist, um das Magnetelement permanent zu Magnetisieren oder zu Entmagnetisieren und dass die Schalteinrichtung ansonsten in einen Stromsperrzustand gesteuert ist. Damit wird verhindert, dass der Hochstrom-Energiespeicher unnötig entladen wird, so dass dessen elektrischer Energievorrat für mehrere Schaltzyklen verwendbar ist.

Wie oben bereits erwähnt betrifft die Erfindung auch eine Schienenbremse eines Schienenfahrzeugs mit der oben beschriebenen Vorrichtung und wenigstens einem aus einem hartmagnetischen Material bestehenden Magnetelement, welches durch Bestromung einer Erregerspule mit Stromimpulsen wahlweise permanent magnetisierbar oder entmagnetisierbar ist, wobei die Bestromung der Erregerspule mit Stromimpulsen mittels der Vorrichtung erfolgt.

Besonders bevorzugt ist die Schienenbremse eine in Bremszuspannstellung mit der Schiene in Reibungskontakt tretende Magnetschienenbremse. Wie eingangs bereits erwähnt, werden dann Magnetelemente, beispielsweise Magnetkerne des Bremsmagneten mittels impulsartiger Bestromung von den Magnetkernen zugeordneten Erregerspulen permanent magnetisiert bzw. mittels impulsartiger entgegen gerichteter Bestromung der Erregerspule entmagnetisiert oder hinsichtlich der magnetischen Polung gegenläufig permanent magnetisiert. Abhängig von der Magnetisierung durch die Erregerspulen werden dann von den Magnetkernen die Schiene durchflutende Magnetfelder erzeugt oder eine Entstehung solcher Magnetfelder unterbunden. Die solchermaßen permanent magnetisierten Magnetkerne erzeugen dann einen magnetischen Fluss, der sich über den Schienenkopf kurzschließt, sobald der Bremsmagnet mit seinen Polschuhen auf der Schiene aufliegt. Dadurch kommt eine magnetische Anziehungskraft zwischen dem Bremsmagnet und der Schiene zustande. Durch die kinetische Energie des bewegten Schienenfahrzeugs wird die Magnetschienenbremse über Mitnehmer entlang der Schiene gezogen. Hierbei entsteht durch die Gleitreibung zwischen Bremsmagnet und Schiene in Verbindung mit der magnetischen Anziehungskraft eine Bremskraft.

Alternativ ist die Magnetschienenbremse eine lineare oder rotatorische Wirbelstrombremse, bei welcher auf die oben beschriebene Weise permanent magnetisierte Magnetkerne Magnetfelder und daraus Bremskräfte erzeugen.

Nicht zuletzt betrifft die Erfindung auch ein Schienenfahrzeug beinhaltend wenigstens eine oben beschriebene Schienenbremse, wobei die oben beschriebene Vorrichtung unmittelbar an einem Drehgestell des Schienenfahrzeugs angeordnet ist. Vor dem Hintergrund, dass zum Zwecke der Permanentmagnetisierung der aus hartmagnetischem Material bestehenden Magnetkerne die zugeordneten Erregerspulen von hohen kurzzeitig wirkenden Stromimpulsen durchflossen werden, bringt diese Maßnahme den Vorteil mit sich, dass Probleme mit elektromagnetischer Verträglichkeit im Hinblick auf weitere elektrische und elektronische Ausrüstungen des Schienenfahrzeugs weitgehend vermieden werden, als solche elektrischen oder elektronischen Einrichtungen eher im Wagenkasten als am Drehgestell vorgesehen werden.

### Zeichnungen

Nachfolgend soll die Erfindung anhand der Zeichnung beispielhaft dargestellt werden. In der Zeichnung zeigt
- Fig.1: eine perspektivische Darstellung eines Bremsmagneten gemäß einer bevorzugten Ausführungsform;
- Fig.2: einen schematischen Schaltplan einer Vorrichtung gemäß einer bevorzugten Ausführungsform der Erfindung;
- Fig.3: einen schematischen Schaltplan einer Vorrichtung gemäß einer weiteren Ausführungsform der Erfindung;
- Fig.4: einen schematischen Schaltplan einer Vorrichtung gemäß einer weiteren Ausführungsform der Erfindung.

### Beschreibung der Ausführungsbeispiele

In der nachfolgenden Beschreibung der Ausführungsbeispiele sind gleiche oder gleich wirkende Bauteile und Baugruppen mit den gleichen Bezugszeichen gekennzeichnet.

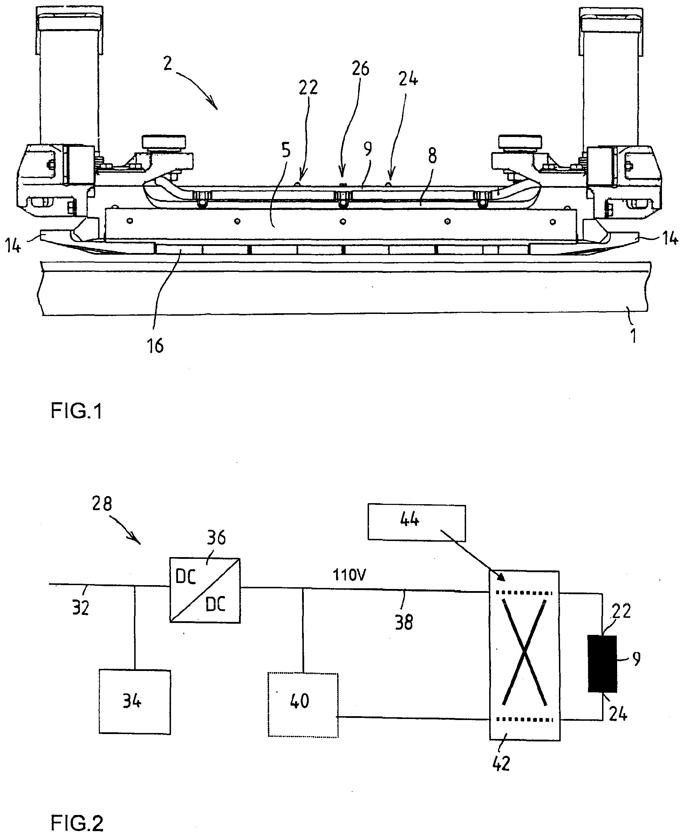

Ein in Fig.1 gezeigter Bremsmagnet 2 einer Magnetschienenbremse weist eine Vielzahl von Polschuhsegmenten 16 auf, welche an einem sich in Längsrichtung der Schiene 1 erstreckenden Magnetkörper 8 befestigt sind. Dies ist vorzugsweise dadurch gelöst, dass die aus hartmagnetischem Material bestehenden Magnetsegmente 5 symmetrisch im Inneren des Magnetkörpers 8 eingebaut sind. Die Übertragung der Bremskräfte auf den Magnetkörper 8 erfolgt dann über die Polschuhsegmente 16, die starr mit dem Magnetkörper 8 verbunden sind und dem Bremsmagneten 2 auch über Weichen und Schienenstößen eine gute Führung geben. Der Magnetspulenkörper 8, der eine Magnetspule 9 und die Magnetsegmente 5 beinhaltet, und die daran befestigten Polschuhsegmente 16 und Endstücke 14 bilden dann zusammen den Bremsmagneten 2.

Um die Magnetspule 9 mit elektrischer Spannung zu versorgen, ist eine wenigstens zwei elektrische Anschlüsse 22, 24 für die Pole einer später noch im Einzelnen beschriebenen Vorrichtung 28 aufweisende Anschlusseinrichtung 26 vorhanden, welche beispielsweise im oberen Bereich einer Seitenfläche des Magnetspulenkörpers 8, bezogen auf dessen Längserstreckung etwa mittig angeordnet ist. Die elektrischen Anschlüsse 22, 24 weisen bevorzugt voneinander weg und erstrecken sich in Längsrichtung des Magnetspulenkörpers 8. Die vorangehende Beschreibung erfolgt nur zu dem Zweck, den prinzipiellen Aufbau einer reibungsbasierten Magnetschienenbremse zu erläutern.

Der in Fig.1 gezeigte Bremsmagnet 2 ist üblicherweise zwischen zwei Achsen eines Drehgestells eines Schienenfahrzeugs angeordnet, wobei je Seite oder Schiene ein Bremsmagnet 2 vorhanden ist. Die beiden Bremsmagneten 2 sind dann durch Quertraversen miteinander verbunden. Durch die beiden Bremsmagneten 2 und die Quertraversen wird eine sog. Bremsenviereck (Magnetschienenbremse) gebildet. Dieses Bremsenviereck ist bevorzugt durch hier nicht gezeigte druckmittelbetätigte Betätigungszylinder im Fahrwerk des Schienenfahrzeugs aufgehängt. Speicherfedern in den drucklosen Betätigungszylindern drücken dann das Bremsenviereck in die von den Schienenköpfen vertikal entfernte Hochlage. Beim Bremsvorgang wird das Bremsenviereck durch Druckbeaufschlagung der Betätigungszylinder abgesenkt. Gleichzeitig werden die Magnetspulen 9 von der Vorrichtung 28 erregt, wie später noch detailliert erläutert wird. Bezüglich des genauen Aufbaus eines solchen Bremsenvierecks wird auf die bereits eingangs erwähnte Literatur "Grundlagen der Bremstechnik", Seiten 92 bis 101 der Knorr-Bremse AG, München, 2002" verwiesen.

Die jeweils an die Anschlüsse 22, 24 eines Bremsmagneten 2 angeschlossene und in Fig.2 gezeigte Vorrichtung 28 dient zur Versorgung der Magnetspule 9 des Bremsmagneten 2 mit elektrischen Stromimpulsen zum hinsichtlich der magnetischen Polung wahlweisen Permanentmagnetisieren und/oder Entmagnetisieren der den Magnetkern bildenden Magnetsegmente 5. Im vorliegenden Fall dient eine einzige Magnetspule 9 zum Magnetisieren bzw. Entmagnetisieren mehrerer Magnetsegmente 5. Es ist jedoch klar, dass auch mehrere Magnetspulen 9 vorgesehen sein können, um ein einziges Magnetsegment 5 bzw. mehrere Magnetsegmente 5 zu magnetisieren, insbesondere in Form von Segmentspuleneinheiten.

Die Vorrichtung 28 umfasst einen von einem unter Bordnetz-Spannung des Schienenfahrzeugs stehenden Bordnetz-Stromkreis 32 des Schienenfahrzeugs mit elektrischer Energie versorgbaren Langzeit-Energiespeicher 34, welcher bevorzugt durch einen Akkumulator gebildet wird. Dieser Langzeit-Energiespeicher 34 ist daher dem Bordnetz-Stromkreis 32 zuzuordnen bzw. stellt einen Bestandteil des Bordnetz-Stromkreises 32 dar.

Der Langzeit-Energiespeicher 34 ist hier bevorzugt ein separater, ausschließlich zur Versorgung der Vorrichtung 28 mit elektrischer Energie vorgesehener Energiespeicher, d.h. der Langzeit-Energiespeicher 34 dient einzig dem Zweck der Versorgung der Vorrichtung 28 mit elektrischer Energie.

Daneben ist ein vom Bordnetz-Stromkreis 32 durch einen Spannungswandler 36 getrennter oder entkoppelter Magnetisierungs-Stromkreis 38 vorhanden, wobei der Spannungswandler 36 die vom Langzeit-Energiespeicher 34 gelieferte Bordnetz-Spannung auf eine vorgegebene Magnetisierungs-Spannung wandelt. In der Praxis kommen je Schienenfahrzeug unterschiedliche Bordnetzspannungen vor, z.B. 24V, 72V und 110V. Die Aufgabe des Spannungswandlers 36 liegt daher darin, die unterschiedlichen Bordnetz(gleich)spannungen (DC) auf eine einheitliche, standardisierte Magnetisierungs-Spannung innerhalb des Magnetisierungs-Stromkreises 38 zu wandeln, beispielsweise auf 110V Gleichspannung (DC). Über den Spannungswandler 36 wird dann ein Hochstrom-Energiespeicher 40 mit elektrischer Energie unter Magnetisierungs-Spannung 110V aufgeladen. Der Hochstrom-Energiespeicher 40 wird bevorzugt durch einen Kondensator oder einen Doppelschichtkondensator gebildet.

Weiterhin beinhaltet der Magnetisierungs-Stromkreis 38 eine einerseits mit dem Hochstrom-Energiespeicher 40 und andererseits mit der Magnetspule 9 in elektrisch leitender Verbindung stehende Schalteinrichtung 42. Durch diese Schalteinrichtung 42 sind abhängig von den von einer Steuereinrichtung 44 ausgesteuerten Steuersignalen auf der im Hochstrom-Energiespeicher 40 gespeicherten elektrischen Energie basierende und hinsichtlich der Stromfließrichtung wahlweise variierbare Stromimpulse auf die Magnetspule 9 schaltbar. Die Steuereinrichtung 44 wird bevorzugt durch ein elektronisches Bremssteuergerät gebildet, welches die Schalteinrichtung 42 durch elektrische Signale steuert.

Im vorliegenden Fall wird die Schalteinrichtung 42 durch einen vom Bremssteuergerät 44 gesteuerten Wendepolschalter gebildet. Dieser Wendepolschalter 42 kann insbesondere als 2-Stellungschalter mit einer Stromrichtungsstellung und einer weiteren, demgegenüber gegenläufigen Stromrichtungsstellung, als 3-Stellungschalter mit einer Stromrichtungsstellung, einer weiteren, demgegenüber gegenläufigen Stromrichtungsstellung sowie mit Neutralstellung oder als 4-Quadrantensteller ausgebildet sein. Im vorliegenden Fall handelt es sich um einen 3-Stellungs-Wendepolschalter 42.

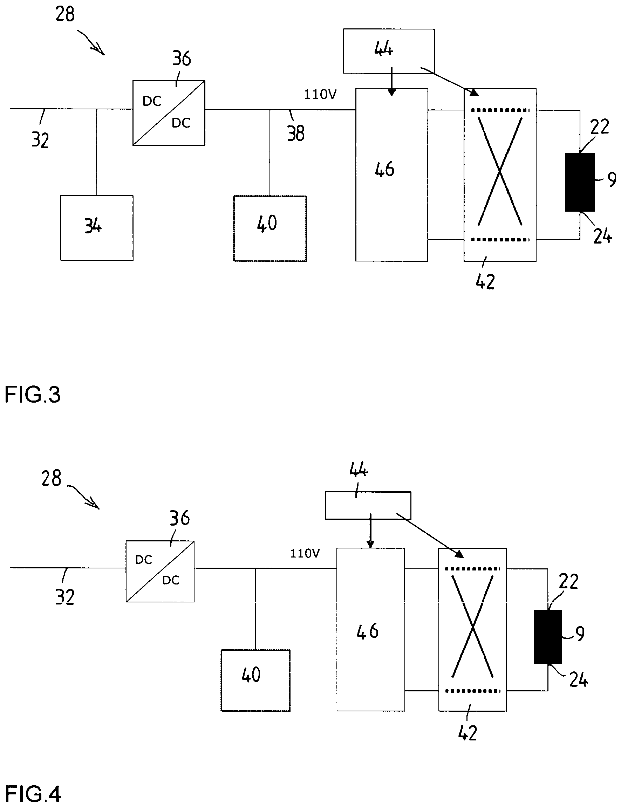

Gemäß der in Fig.3 und Fig.4 gezeigten Ausführungsformen ist dem Wendepolschalter 42 und dem Hochstrom-Energiespeicher 40 ein elektronischer Leistungsschalter 46 zwischengeschaltet, welcher vom Bremssteuergerät 44 derart steuerbar ist, dass der Wendepolschalter 42 ausschließlich im unbelasteten, leistungslosen Zustand schaltbar ist. Mit anderen Worten wird der Leistungsschalter 46 vom Bremssteuergerät 44 vor jedem Schaltvorgang des Wendepolschalters 42 in einen Sperrzustand gesteuert und erst dann in einen stromleitenden Durchgangszustand, wenn der Wendepolschalter 42 bereits in die gewünschte Stellung umgeschaltet wurde.

Im Unterschied zu den Ausführungsformen von Fig.2 und Fig.3 ist bei der Ausführungsform von Fig.4 der Langzeit-Energiespeicher 34 ein dem Schienenfahrzeug zugeordneter Energiespeicher, welcher außer zur Versorgung der Vorrichtung 28 elektrische Energie auch für wenigstens eine weitere Funktion zur Verfügung stellt. Da dann seine Lage im oder am Schienenfahrzeug beliebig ist und er insbesondere nicht in unmittelbarer Nähe der weiteren Bauelemente 36, 38, 40, 42, 44, 46 der Vorrichtung 28 angeordnet zu sein braucht, ist er in Fig.4 nicht dargstellt. Dann erfolgt der Transport der vom Langzeit-Energiespeicher 34 der Vorrichtung 28 zur Verfügung gestellten elektrischen Energie mittels einer Leitung des Bordnetz-Stromkreises 32 zum Spannungswandler 36.

Besonders bevorzugt sind zumindest der Spannungswandler 36, der Hochstrom-Energiespeicher 40, gegebenenfalls der elektronische Leistungsschalter 46 sowie der Wendepolschalter 42 in einem gemeinsamen Gehäuse integriert bzw. in einer Baueinheit zusammengefasst. Zusätzlich kann auch der Langzeit-Energiespeicher 34 in dieser Baueinheit integriert sein. Die Vorrichtung 28 bzw. die integrierte Baueinheit ist dann bevorzugt unmittelbar an dem Drehgestell des Schienenfahrzeugs angeordnet, an welchem auch die Bremsmagnete 2 (siehe Fig.1) einzeln oder paarweise angeordnet sind, deren Magnetspule(n) 9 von der Vorrichtung 28 gesteuert ist.

Dann dient eine Vorrichtung 28 als ein Leistungskanal beispielsweise zur Versorgung der beiden an einem Drehgestell beidseitig vorhandenen Bremsmagnete 2 bzw. eines Bremsenvierecks mit elektrischen Stromimpulsen. Alternativ könnte eine in Fig.2 bis Fig.4 gezeigte Vorrichtung 28 als ein Leistungskanal auch eine oder mehrere Magnetspulen 9 nur eines oder mehrerer Magnetsegmente 5 der Bremsmagneten 2 einer Magnetschienenbremse mit Stromimpulsen versorgen. In einem solchen Fall sind dann je Drehgestell mehrere Vorrichtungen 28 oder Leistungskanäle wie in Fig.2 bis Fig.4 gezeigt, notwendig. Nicht zuletzt können die Bauelemente 34, 36, 38, 40, 42, 44, 46 einer Vorrichtung 28 bzw. eines Leistungskanals auch separat am Drehgestell bzw. teilweise am Drehgestell und teilweise am oder im Wagenkasten verstreut angeordnet sein.

Vor diesem Hintergrund ist die Funktionsweise der Vorrichtung 28 wie folgt: Ausgehend von einem Fahrzustand des Schienenfahrzeugs, in welchem das Bremsenviereck und damit der Bremsmagneten 2 gemäß Fig.1 vom Schienenkopf 18 beabstandet gehalten sind, die Magnetsegmente 5 der Bremsmagnete 2 entmagnetisiert sind und sich der Wendepolschalter 42 in seiner stromsperrenden Neutralstellung befindet wird beispielsweise eine Notbremsung ausgelöst. Das Bremssteuergerät 44 erhält dann ein entsprechendes elektrisches Notbremssignal, welches daraufhin veranlasst, dass die Betätigungszylinder des Bremsenvierecks druckbeaufschlagt werden, um es abzusenken. Gleichzeitig werden die Magnetspulen 9 der Bremsmagnete 2 von der Vorrichtung 28 erregt.

Im Einzelnen wird hierzu ausgehend von einem vollständig geladenen Hochstrom-Energiespeicher 40 der Wendepolschalter 42 vom Bremsteuergerät 44 in einen Durchgangszustand geschaltet, in welchem die Stromflussrichtung des dann die Magnetspulen 9 durchfließenden Stromimpulses das hartmagnetische Material der Magnetsegmente 5 in einer Weise permanent magnetisieren, dass der sich dann ergebende magnetische Fluss die eine Schiene 1 durchsetzt, um einen magnetischen Kreis zu schließen.

Bevorzugt wird der Wendepolschalter 42 dabei vom Bremssteuergerät 44 nur solange in seine stromdurchlässige Durchgangsstellung geschaltet, bis sich ein Stromimpuls in den Magnetspulen 9 aufbauen kann, welcher ausreichend ist, um die Magnetgsegmente 5 permanent zu magnetisieren. Hierbei können Erfahrungswerte für die Umschaltdauer des Wendepolschalters 42 dienen. Danach, d.h. nach erfolgter Permanentmagnetisierung der Magnetsegmente 5 wird hingegen der Wendepolschalter 42 sofort wieder in seine stromsperrende Neutralstellung zurückgeschaltet, damit der Hochstrom-Energiespeicher 40 nicht unnötig entladen wird.

Hierdurch wirken zusätzlich zu den aus den Speicherfedern auf das Bremsenviereck wirkenden Federkräfte weiterhin vertikale magnetische Kräfte auf die Bremsmagnete 2, wodurch diese noch weiter auf die Schiene 1 gedrückt werden. Bedingt durch den Reibungskontakt der Magnetschienenbremsen 4 mit der Schiene 1 entstehen dann in horizontaler Richtung wirkende Bremskräfte.

Soll nun ausgehend vom Bremszustand die Notbremse wieder gelöst werden, so werden hierzu die Betätigungszylinder druckentlastet, wodurch die Speicherfedern das Bremsenviereck nach oben ziehen. Gleichzeitig steuert das Bremsensteuergerät 44 den Wendepolschalter 42 in einen Zustand, in welchem die Stromflussrichtung für den dann kurzzeitig vorhandenen Stromimpuls die bisher permanent magnetisierten Magnetsegmente 5 entmagnetsiert. Damit entfallen die magnetische Kräfte, welche zuvor noch als Normalkräfte auf die Bremsmagnete 2 des Bremsenvierecks wirkten, so dass auch keine Reibungskräfte mehr vorhanden sind.

Es ist klar, dass die oben beschriebene Vorrichtung auch in einer linearen Wirbelstrombremse eingesetzt werden kann, sofern diese permanent magnetsierbare Magnetglieder sowie diese erregende Erregerspulen enthält.

### Bezugszahlenliste

- 1: Schiene
- 2: Bremsmagnet
- 5: Magnetsegmente
- 8: Magnetspulenkörper
- 9: Magnetspule
- 14: Endstück
- 16: Polschuhsegmente
- 22: elektr. Anschluss
- 24: elektr. Anschluss
- 26: Anschlusseinrichtung
- 28: Vorrichtung
- 32: Bordnetz-Stromkreis
- 34: Langzeit-Energiespeicher
- 36: Spannungswandler
- 38: Hochstrom-Energiespeicher
- 40: Schalteinrichtung
- 42: Steuereinrichtung
- 44: Leistungsschalter

## Patentansprüche

1. Vorrichtung (28) zur Versorgung wenigstens einer elektrischen Erregerspule (9) mit wenigstens einem elektrischen Stromimpuls zum hinsichtlich der magnetischen Polung wahlweisen Permanentmagnetisieren oder Entmagnetisieren wenigstens eines hartmagnetisches Material beinhaltenden Magnetsegments (5) eines Bremsmagneten (2) eines Schienenfahrzeugs, **gekennzeichnet durch**
a) wenigstens einen von einem mindestens zeitweise unter Bordnetz-Spannung stehenden Bordnetz-Stromkreis (32) des Schienenfahrzeugs mit elektrischer Energie versorgbaren Langzeit-Energiespeicher (34),
b) wenigstens einen Magnetisierungs-Stromkreis (38), mit einem Spannungswandler (36) zur Wandelung der vom Langzeit-Energiespeicher (34) gelieferten Bordnetz-Spannung auf eine vorgegebene Magnetisierungs-Spannung und zum Aufladen wenigstens eines Hochstrom-Energiespeichers (40) mit elektrischer Energie unter Magnetisierungs-Spannung sowie mit einer einerseits mit dem Hochstrom-Energiespeicher (40) und andererseits mit der Erregerspule (9) in elektrisch leitender Verbindung stehenden Schalteinrichtung (42), **durch** welche abhängig von den von einer Steuereinrichtung (44) ausgesteuerten Steuersignalen auf der im Hochstrom-Energiespeicher (40) gespeicherten elektrischen Energie basierende und hinsichtlich der Stromfließrichtung wahlweise variierbare Stromimpulse auf die Erregerspule (9) schaltbar sind.

2. Vorrichtung nach Anspruch 1, **dadurch gekennzeichnet, dass** der Langzeit-Energiespeicher (34) ein dem Schienenfahrzeug zugeordneter Energiespeicher ist, welcher elektrische Energie außer zur Erzeugung des wenigstens einen elektrischen Impulses auch für wenigstens eine weitere Funktion zur Verfügung stellt.

3. Vorrichtung nach Anspruch 1, **dadurch gekennzeichnet, dass** der Langzeit-Energiespeicher (34) ein separater, ausschließlich zur Versorgung der Vorrichtung (28) mit elektrischer Energie vorgesehener Energiespeicher ist.

4. Vorrichtung nach Anspruch 3, **dadurch gekennzeichnet, dass** der Langzeit-Energiespeicher (34) mittels einer Schutzdiode mit dem Bordnetz-Stromkreis in Verbindung steht.

5. Vorrichtung nach einem der vorhergehenden Ansprüche, **dadurch gekennzeichnet, dass** die Schalteinrichtung (42) wenigstens einen von der Steuereinrichtung (44) elektrisch oder durch Druckmittel steuerbaren Wendepolschalter beinhaltet.

6. Vorrichtung nach Anspruch 5, **dadurch gekennzeichnet, dass** der Wendepolschalter (42) als 2-Stellungschalter mit einer Stromrichtungsstellung und einer weiteren, demgegenüber gegenläufigen Stromrichtungsstellung, als 3-Stellungschalter mit einer Stromrichtungsstellung, einer weiteren, demgegenüber gegenläufigen Stromrichtungsstellung sowie mit Neutralstellung oder als 4-Quadrantensteller ausgebildet ist.

7. Vorrichtung nach einem der vorhergehenden Ansprüche, **dadurch gekennzeichnet, dass** der Hochstrom-Energiespeicher (40) wenigstens einen Kondensator oder einen Doppelschichtkondensator beinhaltet.

8. Vorrichtung nach einem der vorhergehenden Ansprüche, **dadurch gekennzeichnet, dass** der Schalteinrichtung (42) und dem Hochstrom-Energiespeicher (40) wenigstens ein Leistungsschalter (46) zwischengeschaltet ist, welcher von der Steuereinrichtung (44) derart steuerbar ist, dass die Schalteinrichtung (42) ausschließlich im nicht belasteten, leistungslosen Zustand schaltbar ist.

9. Vorrichtung nach einem der vorhergehenden Ansprüche, **dadurch gekennzeichnet, dass** die Steuereinrichtung (44) durch ein elektronisches Steuergerät gebildet wird.

10. Vorrichtung nach einem der vorhergehenden Ansprüche, **dadurch gekennzeichnet, dass** die Steuereinrichtung (44) derart ausgebildet ist, dass die Schalteinrichtung (42) nur für eine Zeitdauer in einen Stromdurchgangszustand gesteuert wird, in dem wenigstens ein Stromimpuls auf die Erregerspule (9) geschaltet ist, welche notwendig ist, um das Magnetsegment (5) permanent zu Magnetisieren oder zu Entmagnetisieren und dass die Schalteinrichtung (42) ansonsten in einen Stromsperrzustand gesteuert ist.

11. Schienenbremse eines Schienenfahrzeugs beinhaltend die Vorrichtung (28) nach einem der vorhergehenden Ansprüche und einen Bremsmagneten (2) mit wenigstens einem aus einem hartmagnetischen Material bestehenden Magnetelement (5), welches durch Bestromung einer Erregerspule (9) mit Stromimpulsen wahlweise permanent magnetisierbar oder entmagnetisierbar ist, wobei die Bestromung der Erregerspule (9) mit Stromimpulssen mittels der Vorrichtung (28) erfolgt.

12. Schienenbremse nach Anspruch 11, **dadurch gekennzeichnet, dass** sie eine in Bremszuspannstellung mit einer Schiene (1) in Reibungskontakt tretende Magnetschienenbremse (4) ist.

13. Schienenbremse nach Anspruch 11, **dadurch gekennzeichnet, dass** sie eine lineare oder rotatorische Wirbelstrombremse ist.

14. Schienenfahrzeug beinhaltend wenigstens eine Schienenbremse nach einem der Ansprüche 11 bis 13, wobei die Vorrichtung (28) unmittelbar an einem Drehgestell des Schienenfahrzeugs angeordnet ist.

## Claims

1. Device for supplying at least one electrical current pulse to at least one electrical field coil (9) for selectively permanently magnetising or demagnetising at least one magnet segment (5), which contains a hard-magnetic material, of a brake magnet (2) of a rail vehicle in respect of the magnetic polarity,
**characterised by**
a) at least one long-term energy storage device (34) which can be supplied with electrical energy by an on-board electrical system circuit (32) of the rail vehicle, which on-board electrical system circuit at least temporarily is under an on-board electrical system voltage,
b) at least one magnetisation circuit (38), comprising a voltage converter (36) for converting the on-board electrical system voltage, which is delivered by the long-term energy storage device (34), to a pre-specified magnetisation voltage and for charging at least one high-current energy storage device (40) with electrical energy under a magnetisation voltage, and further comprising a switching device (42) which is electrically conductively connected to the high-current energy storage device (40) at one end and to the field coil (9) at the other end and by means of which current pulses, which are based on the electrical energy which is stored in the high-current energy storage device (40) and can be selectively varied in respect of the direction of current flow, can be switched to the field coil (9), depending on the control signals which are output by a control device (44).

2. Device according to claim 1, **characterised in that** the long-term energy storage device (34) is an energy storage device which is associated with the rail vehicle and which provides electrical energy both for generating the at least one electrical pulse and also for at least one further function.

3. Device according to claim 1, **characterised in that** the long-term energy storage device (34) is a separate energy storage device which is provided exclusively for supplying electrical energy to the device (28).

4. Device according to claim 3, **characterised in that** the long-term energy storage device (34) is connected to the on-board electrical system circuit by means of a protective diode.

5. Device according to any of the preceding claims, **characterised in that** the switching device (42) contains at least one reversing pole switch which can be controlled by the control device (44) in an electrical manner or by means of a pressure medium.

6. Device according to claim 5, **characterised in that** the reversing pole switch (42) is in the form of a 2-position switch with one current-direction position and one further current-direction position which is opposite to the former, in the form of a 3-position switch with one current-direction position, one further current-direction position which is opposite to the former and also with a neutral position, or in the form of a 4-quadrant actuator.

7. Device according to any of the preceding claims, **characterised in that** the high-current energy storage device (40) contains at least one capacitor or one double-layer capacitor.

8. Device according to any of the preceding claims, **characterised in that** at least one circuit breaker (46) is connected between the switching device (42) and the high-current energy storage device (40), it being possible for said circuit breaker to be controlled by the control device (44) in such a way that the switching device (42) can be switched only in the no-load, no-power state.

9. Device according to any of the preceding claims, **characterised in that** the control device (44) is represented by an electronic controller.

10. Device according to any of the preceding claims, **characterised in that** the control device (44) is designed in such a way that the switching device (42) is controlled only for a period of time in a current-conducting state in which at least one current pulse is switched to the field coil (9), which is required in order to permanently magnetise or demagnetise the magnet segment (5), and **in that** the switching device (42) is otherwise moved to a non-current-conducting state.

11. Track brake of a rail vehicle, comprising the device (28) according to any of the preceding claims and a brake magnet (2) at least one magnet segment (5) consisting of a hard-magnetic material and capable of being selectively permanently magnetised or demagnetised by supplying a field coil (9) with current pulses, wherein the field coil (9) is supplied with current pulses by means of the device (28).

12. Track brake according to claim 11, **characterised in that** it is a magnetic track brake (4) which comes into frictional contact with a rail (1) in a brake-application position.

13. Track brake according to claim 11, **characterised in that** it is a linear or rotary eddy-current brake.

14. Rail vehicle comprising at least one track brake according to any of claims 11 to 13, wherein the device (28) is arranged directly on a bogie of the rail vehicle.

## Revendications

1. Dispositif (28) pour alimenter au moins une bobine (9) d'excitation électrique en au moins une impulsion de courant électrique pour, en ce qui concerne la polarité magnétique, au choix magnétiser ou démagnétiser de manière permanente au moins un segment (5) d'aimant, qui contient un matériau magnétique dur, d'un aimant (2) de frein d'un véhicule ferroviaire, **caractérisé par**
a) au moins un accumulateur (34) d'énergie à long terme, qui peut être alimenté en énergie électrique par un circuit (32) de réseau de bord se trouvant au moins de temps en temps sous tension du réseau de bord du véhicule ferroviaire,
b) au moins un circuit (38) de magnétisation, comportant un convertisseur (36) de tension pour convertir la tension de réseau de bord fournie par l'accumulateur (34) d'énergie à long terme en une tension de magnétisation déterminée à l'avance et pour charger au moins un accumulateur (40) d'énergie à courant intense avec une énergie électrique sous tension de magnétisation et comportant également un dispositif (42) de commutation qui est en liaison conductrice de l'électricité d'une part avec l'accumulateur (40) d'énergie à courant intense et d'autre part avec la bobine (9) d'excitation et par lequel, en fonction des signaux de commande qui sont émis en sortie par un dispositif (44) de commande, des impulsions de courant, qui reposent sur de l'énergie électrique accumulée dans l'accumulateur (40) d'énergie à courant intense et qui peuvent être modifiées au choix en ce qui concerne le sens de flux du courant, peuvent être commutées vers la bobine (9) d'excitation.

2. Dispositif suivant la revendication 1, **caractérisé en ce que** l'accumulateur (34) d'énergie à long terme est un accumulateur d'énergie qui est associé au véhicule ferroviaire et dont de l'énergie électrique est à disposition, outre pour produire ladite au moins une impulsion électrique, également pour au moins une autre fonction.

3. Dispositif suivant la revendication 1, **caractérisé en ce que** l'accumulateur (34) d'énergie à long terme est un accumulateur d'énergie distinct, qui est prévu exclusivement pour alimenter le dispositif (28) en énergie électrique.

4. Dispositif suivant la revendication 3, **caractérisé en ce que** l'accumulateur (34) d'énergie à long terme est relié au circuit du réseau de bord au moyen d'une diode de protection.

5. Dispositif suivant l'une des revendications précédentes, **caractérisé en ce que** le dispositif (42) de commutation contient au moins un inverseur de pôle de commutation pouvant être commandé par le dispositif (44) de commande de manière électrique ou au moyen d'un agent de pression.

6. Dispositif suivant la revendication 5, **caractérisé en ce que** l'inverseur (42) de pôle de commutation est sous la forme d'un commutateur à deux positions ayant une position dans le sens du courant et une position dans le sens contraire, sous la forme d'un commutateur à trois positions ayant une position dans le sens du courant, une autre position dans le sens contraire et également une position neutre ou sous la forme d'un actionneur à quatre quadrants.

7. Dispositif suivant l'une des revendications précédentes, **caractérisé en ce que** l'accumulateur (40) d'énergie à courant intense comporte au moins un condensateur ou un condensateur double couche.

8. Dispositif suivant l'une des revendications précédentes, **caractérisé en ce qu'**au moins un disjoncteur (46) est monté entre le dispositif (42) de commutation et l'accumulateur (40) d'énergie à courant intense, le disjoncteur (46) pouvant être commandé par le dispositif (44) de commande de sorte que le dispositif (42) de commutation peut être commuté exclusivement dans l'état non chargé sans puissance.

9. Dispositif suivant l'une des revendications précédentes, **caractérisé en ce que** le dispositif (44) de commande est formé d'un appareil de commande électronique.

10. Dispositif suivant l'une des revendications précédentes, **caractérisé en ce que** le dispositif (44) de commande est réalisé de sorte que le dispositif (42) de commutation est mis uniquement pendant une durée dans un état conducteur de courant, dans lequel au moins une impulsion de courant est envoyée à la bobine (9) d'excitation, qui est nécessaire pour magnétiser ou démagnétiser de manière permanente le segment (5) magnétique et **en ce que** le dispositif (42) de commutation est sinon mis dans un état de blocage du courant.

11. Frein de voie ferroviaire d'un véhicule ferroviaire incluant le dispositif (28) suivant l'une des revendications précédentes et un aimant (2) de frein comportant au moins un élément (5) magnétique constitué d'un matériau magnétique dur et qui peut être magnétisé ou démagnétisé au choix de manière permanente par alimentation en impulsions de courant d'une bobine (9) d'excitation, la fourniture d'impulsions de courant à la bobine (9) d'excitation s'effectuant au moyen du dispositif (28).

12. Frein de voie suivant la revendication 11, **caractérisé en ce qu'**il s'agit d'un frein de voie (4) magnétique qui vient en contact de frottement avec un rail (1) dans une position de serrage du frein.

13. Frein de voie suivant la revendication 11, **caractérisé en ce que** le frein de voie est un frein à courant de Foucault linéaire ou rotatif.

14. Véhicule ferroviaire incluant au moins un frein de voie suivant l'une des revendications 11 à 13, dans lequel le dispositif (28) est monté directement sur un boggie du véhicule ferroviaire.
